# EUROPEAN PATENT SPECIFICATION

(11) **EP 1 031 483 B1**
(45) Date of publication and mention of the grant of the patent: **03.01.2001**
(21) Application number: 99830027.1
(22) Date of filing: 26.02.1999
(51) Int. Cl.: B60S 9/215

(54) **Fast-turn agricultural tractor and method**
Landwirtschaftstraktor mit schnellem Wendemechanismus und Verfahren
Tracteur agricole avec système et méthode pour tourner rapidement

(43) Date of publication of application: 30.08.2000
(73) Proprietor: SAME DEUTZ-FAHR S.P.A., 24047 Treviglio (Bergamo) (IT)
(72) Inventor: Locatelli, Marco, 26029 Soncino (Cremona) (IT)
(74) Representative: Marchitelli, Mauro

(56) References cited:
- WO-A-85/01921
- WO-A-92/06871
- GB-A- 2 138 372
- PATENT ABSTRACTS OF JAPAN vol. 017, no. 648 (M-1518), 2 December 1993 (1993-12-02) & JP 05 208660 A (KUBOTA CORP), 20 August 1993 (1993-08-20)

## Description

The present invention relates to an agricultural tractor and to a method for fast-turning the same.

The invention has been developed in order to reduce the dead times during plowing. Plowing can be carried out "in furrow", that is with a front wheel and a rear wheel of the tractor which enter into the furrow formed by the plow during the previous run, which provides a directional reference to the subsequent run, or "outside furrow" in which case no wheel enters into the furrow formed by the plow. In both cases, when the tractor arrives at the head of the field (usually called headland), it is necessary to turn around the tractor for making the subsequent run. During the turn around the two-way direct-connected plow is also rotated.

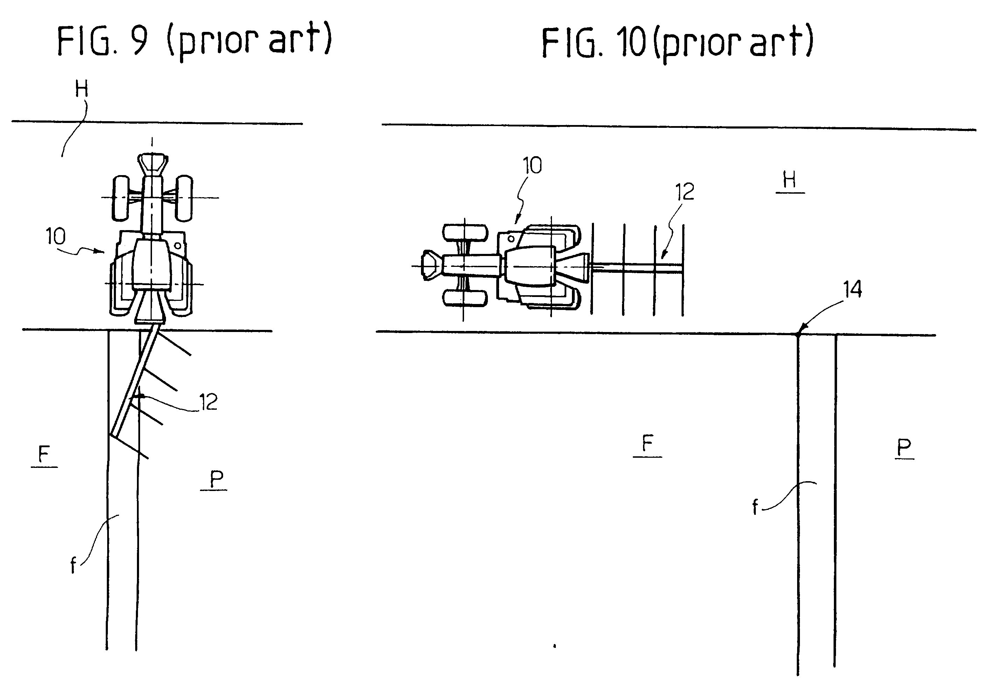

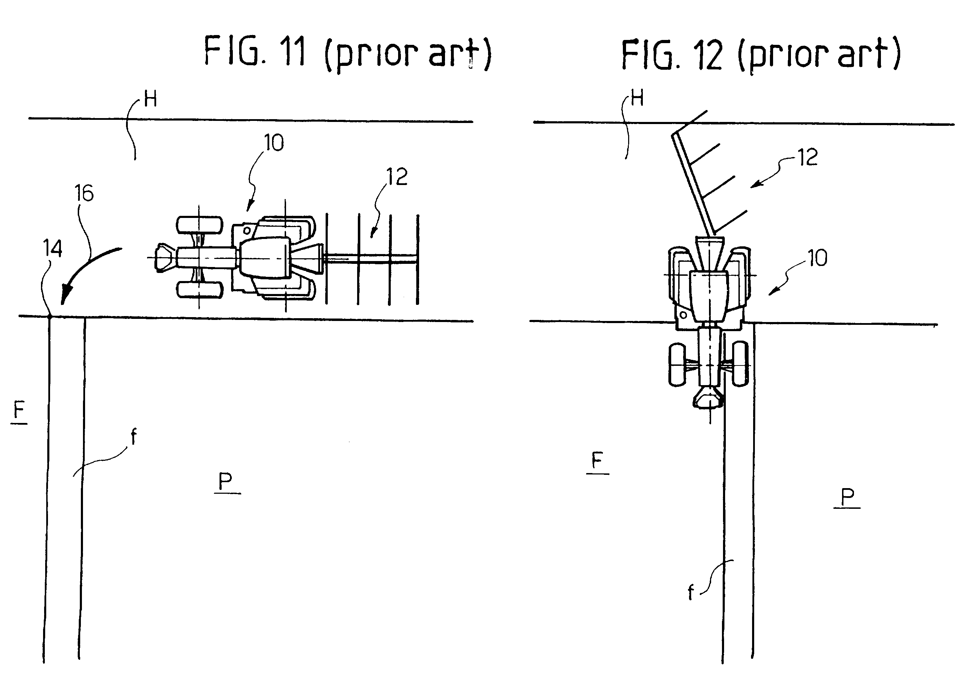

In figures 9 to 12 there is schematically shown the turn around sequence of a conventional tractor. In this figures the numeral reference 10 indicates a tractor which plows a field F by means of a two-way direct-connected plow 12. The plowed part of the field F is indicated p whereas F indicates the furrow formed by the plow 12. The field end or headland is indicated H. Figure 9 shows the moment at which the tractor 10 ends a run and reaches the headland H. The beginning of the subsequent run is usually very close to the zone in which the outer rear wheel is positioned when the tractor finishes the previous run. As shown in figures 10, 11 and 12, for beginning the subsequent run the tractor 10 must go away from the point of beginning of the new run, indicated at 14 in figure 10. During this step, the tractor 10 is perpendicular to the plowing direction (figure 10) and the tractor rotates the plow 12. As shown in figure 11, the tractor 10 must move backward so that by steering in the direction indicated by the arrow 16 the tractor can reenter in the point of beginning of the subsequent run, as shown in figure 12.

This manoeuvre is difficult and involves a considerable dead time during the work.

An agricultural tractor according to the preamble of claim 1 is known from GB-A-2138372. This document shows a tractor having a front lifting device which can be pressed downwardly into contact with the ground so that the front wheels can be raised and can be removed rapidly.

JP 05 208660 discloses a tractor provided with a grounding unit which can be lowered down and grounded to the ground surface to raise the tractor from the ground. The grounding unit can be rotated about a vertical axis so that the tractor is turned about the center of rotation of the grounding unit.

The object of the present invention is to provide an improved fast-turn agricultural tractor with a simple and low cost structure.

According to the present invention, this object is achieved by an agricultural tractor and by a method for fast-turning the same, having the features forming the subject of the claims.

The present invention now will be described in detail with reference to the attached drawings, in which:
- figures 1 and 2 are, respectively, a lateral and a front view of an agricultural tractor according to the present invention,
- figures 3 and 4 are views similar to figures 1 and 2, showing the tractor during a fast turn,
- figures 5 to 8 are schematic plan views showing a fast turn method according to the invention, and
- figures 9 to 12 which have already been disclosed, are plan views showing a traditional turn-around sequence.

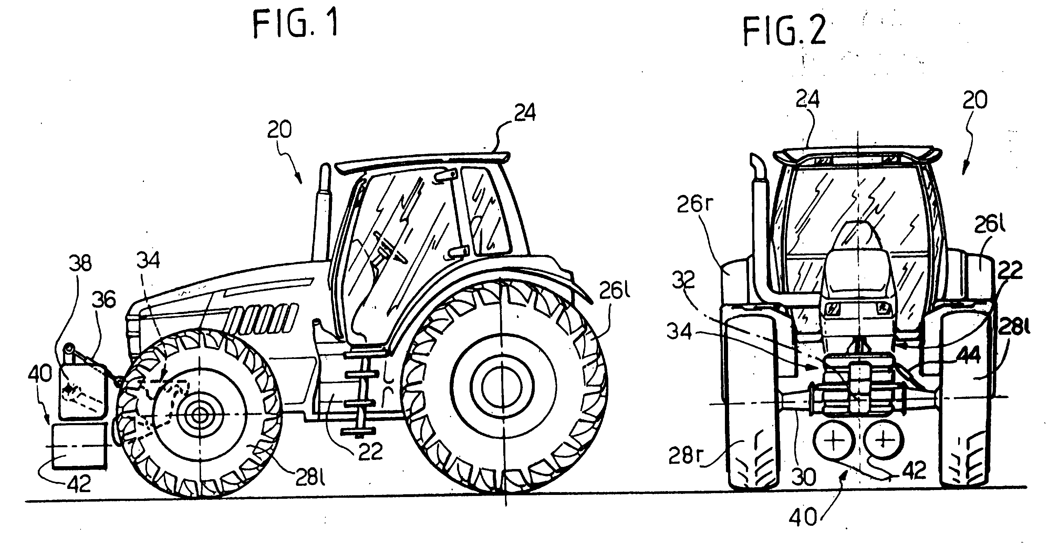

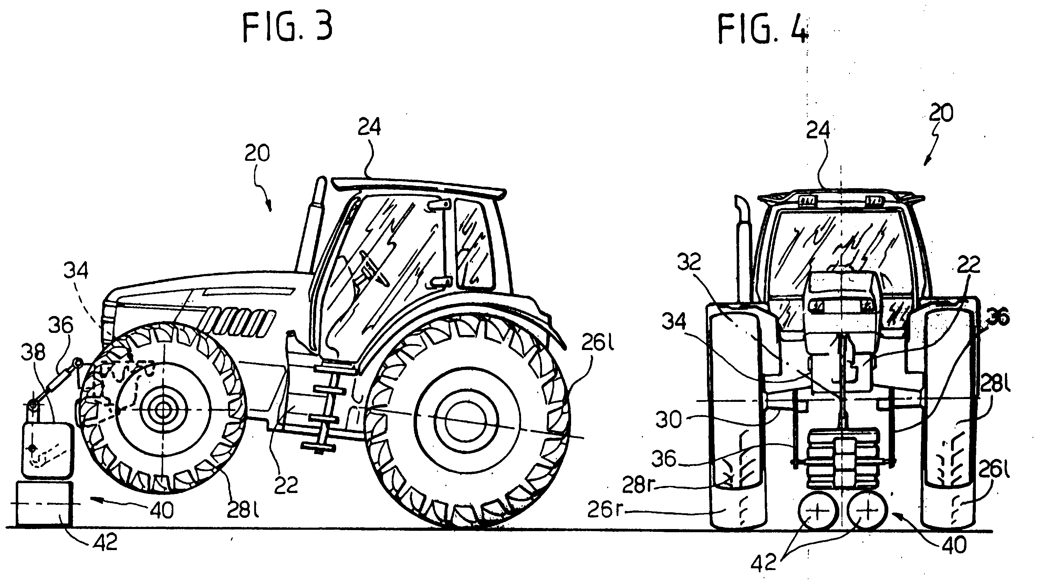

With reference to figures 1 to 4, 20 indicates an agricultural tractor comprising, in a conventional way, a main frame 22 carrying a driving cab 24. In a way per se known, the tractor 20 has a pair of rear wheels 26ₗ, 26ᵣ rigidly connected to the main frame 22 and a pair of front wheels 28ₗ, 28ᵣ carried by a front axle 30. The axle 30 can be rigidly connected to the main frame 22 or, as in the majority of modern tractors, can be pivotally connected to the main frame 22 about a longitudinal axis. In the example shown in the figures, the front axle 30 is pivotally mounted about a longitudinal axis 32 orthogonal to the plane of figures 2 and 4.

A double-acting hydraulic hoisting device 34, per se known, is mounted at the front end of the main frame 22. The hoisting device 34 comprises a pair of arms 36 at the end of which a ballast 38 is connected. A bearing device 40 is connected to the ballast 38 and is intended to cooperate with the ground for lifting from the ground the front wheels 28ₗ, 28ᵣ as a consequence of the application of a downward force produced by the hoisting device 34. In the embodiment shown in the figures, the bearing device 40 comprises a pair of rollers 42 rotatably carried by the ballast 38 about respective axes parallel to the longitudinal axis of the vehicle. The bearing device 40 has to permit a movement of its own contact area against the ground along a direction substantially transversal with respect to the longitudinal axis of the vehicle. The bearing device 40 could be formed in any way adapted to permit such transversal movement. Instead of a pair of rollers 42, the device 40 could be provided for instance with a single wheel rotatable about a fixed longitudinal axis or with an idle wheel pivotally mounted about a vertical axis, so that it can adapt its own axis of rotation to the direction of movement of the front part of the tractor. The bearing device 40 could also have no rotating member and could be formed by a simple bearing plate adapted to slide on the ground. If the bearing device 40 is provided with rotating members (rollers or wheels) they could either by idle or provided with a driving system (for instance they could be associated with a hydraulic motor). Such rotating members could also be connected to the steering mechanism of the vehicle, for enabling control of their rotating direction by means of the steering wheel.

In figures 1 and 2 the hoisting device 34 is in a raised inoperative position in which the bearing device 40 is lifted from the ground. In the position shown in figures 3 and 4, the hoisting device 34 is in a operative position in which it pushes downwardly the bearing device 40 thereby lifting the front wheels 28ₗ, 28ᵣ.

If the front axle 30 is pivotable about a longitudinal axis, the tractor 20 is preferably provided with a locking device for preventing a free oscillation of the front axle 30. As shown in figure 2, the locking device could be formed by a small hydraulic cylinder 44 whose ends are articulated to the main frame 22 and, respectively, to the front axle 30. When the cylinder 44 is unlocked, the front axle 30 is free to oscillate about the axis 32. The cylinder 44 can be locked in any position for maintaining the front axle 30 with a predetermined angular position with respect to the main frame 22.

In a way per se known, the tractor 20 is provided with a separate-circuits braking system which enables braking of either left-side wheels or right side wheels. If the tractor 20 has self-locking differentials, it is also provided with a device per se known for unlocking the differentials.

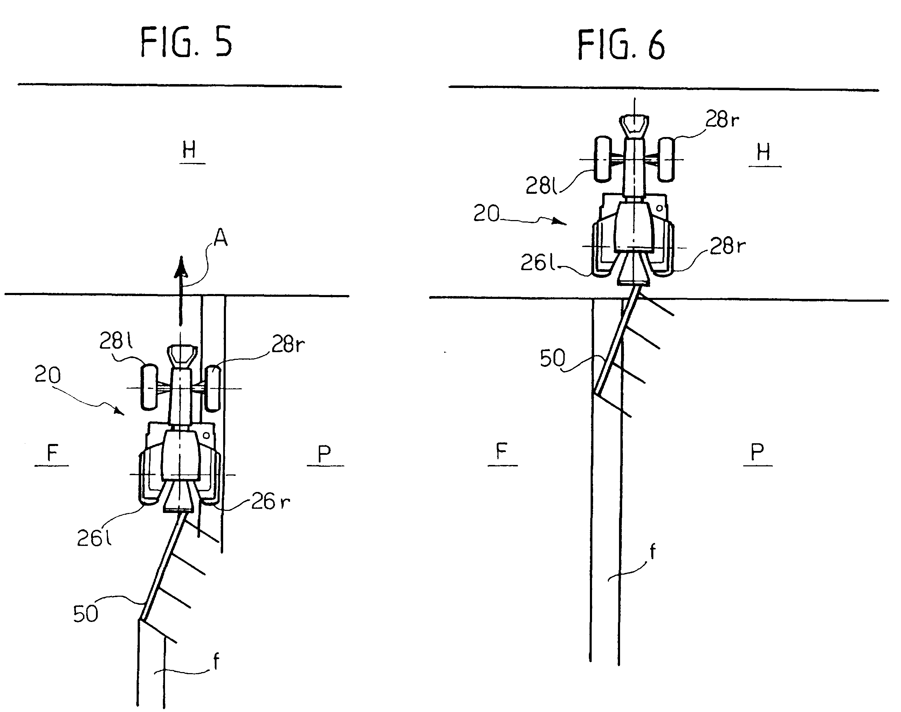

Figures 5 to 8 show the fast-turn sequence of a tractor according to the present invention. In figure 5 the tractor 20 is finishing a run and forms a furrow f by means of a two-way direct-connected plow 50 connected to a rear hoisting device. The plowed part p of the field F is on the right side of the tractor 20, with reference to the driving direction indicated by the arrow A.

Figure 6 shows the step in which the tractor 20 has reached the headland H. In this configuration, without going away from the zone in which it has finished the run, the tractor 20 makes a fast turn as disclosed in the following. For turning the tractor 20 in an anticlockwise direction (with reference to figure 6) the operator brakes the left-side wheels and switches-on a fast-turn control device. The control device carries out automatically the following operations:
- locking the oscillation of the front axle 30,
- unlocking the self-locking differentials, and
- activating the front hoisting device 34 for lifting the front wheels 28ₗ, 28ᵣ.

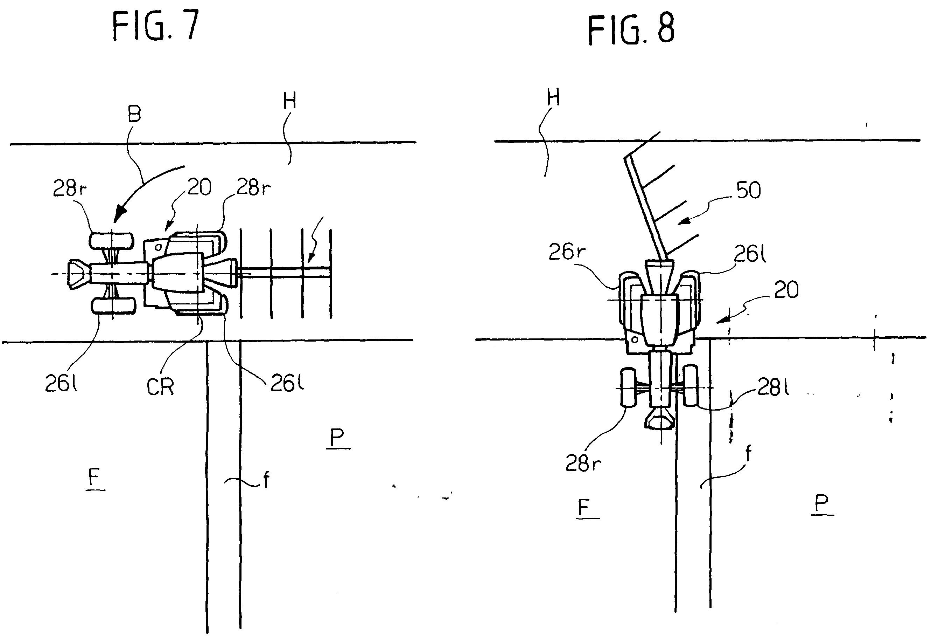

In this condition, the operator selects a gear and accelerates slightly. The tractor 20 reacts by rotating about a vertical axis passing for the contact point to the ground of the braked rear wheel. In figure 7 the arrow B indicates the direction of rotation of the tractor about the centre of rotation CR. In figure 7 the tractor has made a rotation of 90° and in figure 8 the tractor has finished the fast-turn with a rotation of 180° with respect to the initial position. During this manoeuvre, the plow 50 is rotated of 180° about a horizontal axis. The tractor could be provided with a sensor adapted to detect which wheels have been braked. This would enable the control device controlling the fast turn of the tractor to determine whether the tractor must carry out a clockwise or anticlockwise rotation. Consequently, the control device is in condition to automatically control the rotation of the plow 50 for bringing the same in the correct working position.

When the tractor has finished the fast turn, the operator turns-off the fast-turn control device which consequently lifts the bearing device 40, unlocks the front axle 30 and disabilitates the unlocking of the differentials. In this way, the normal driving conditions are restored and the tractor 20 is ready for a second run. The wheels facing towards the plowed part p are exactly in the point of beginning of the subsequent run, without the need for further manoeuvres.

This system enables a reduction of the turn-around dead time of about 80%. In fact, it is estimated that a traditional turn-around takes about 30 seconds whereas with the system according to the invention 6 seconds are sufficient.

## Claims

1. An agricultural tractor (20) comprising a pair of rear wheels (26ₗ, 26ᵣ) a pair of front wheels (28ₗ, 28ᵣ) and a hoisting device (34) mounted on the front part of the tractor, the hoisting device (34) carrying a bearing device (40) intended to cooperate with the ground for lifting the front wheels (28ₗ, 28ᵣ), characterized in that the tractor has a separate-circuits braking system for separately braking either the right-side wheels or the left-side wheels, and that said bearing device (40) is adapted to move with respect to the ground along a direction substantially transversal to the driving direction of the tractor (20) so as to enable a rotation of the tractor (20) about a vertical axis passing for a rear wheel when such rear wheel is braked while the other rear wheel is driven.

2. An agricultural tractor according to claim 1, characterized in that said bearing device (40) comprises at least a rotating member (42) rotatable about a longitudinal axis.

3. An agricultural tractor according to claim 2, characterized in that said rotating member is pivotable about a vertical axis.

4. An agricultural tractor according to claim 2, characterized in that said rotating member can be controlled by means of the steering mechanism of the tractor.

5. An agricultural tractor according to claim 2, characterized in that said rotating member is motor-driven.

6. An agricultural tractor according to claim 1, characterized in that the front wheels (28ₗ, 28ᵣ) are carried by an axle (30) pivotable about a longitudinal axis (32), and in that means (44) are provided for locking in a predetermined position the axle (30).

7. An agricultural tractor according to claim 6, characterized in that it comprises a self-locking differential connected to the rear wheels (26ₗ, 26ᵣ) and in that it further comprises a device for unlocking said differential.

8. An agricultural tractor according to claim 7, characterized in that it comprises a control unit adapted to prepare the tractor for a fast-turn manoeuvre, said control unit being operatively connected to said hoisting device (34), to said device for locking the front axle (44) and to said device for unlocking the differential.

9. An agricultural tractor according to claim 8, characterized in that it further comprises sensor means for detecting which wheel has been braked and for determining consequently the direction of rotation of a plow carried by the tractor.

10. A method for fast turning an agricultural tractor, characterized in that it comprises the steps of:
- lifting from the ground the front wheels by means of a hoisting device (34) provided with a bearing member (40) intended to cooperate with the ground, and
- braking a rear wheel of the tractor and driving in rotation the other rear wheel, so as to produce a rotation of the tractor about a vertical axis passing for the braked rear wheel.

## Patentansprüche

1. Landwirtschaftstraktor (20) mit einem Paar Hinterräder (26ₗ, 26ᵣ), einem Paar Vorderräder (28ₗ, 28ᵣ) und einem Hebewerk (34), das am Vorderteil des Traktors montiert ist und eine Lagervorrichtung (40) trägt, die dazu vorgesehen ist, in Zusammenarbeit mit dem Boden die Vorderräder (28ₗ, 28ᵣ) hochzuheben,
dadurch gekennzeichnet, daß
der Traktor ein getrenntes Bremskreissystem aufweist, um entweder die Räder auf der rechten Seite oder die Räder auf der linken Seite getrennt abzubremsen, und daß die Lagervorrichtung (40) geeignet ist, sich bezüglich des Bodens entlang einer im wesentlichen quer zur Fahrtrichtung des Traktors (20) verlaufenden Richtung zu bewegen, um eine Drehung des Traktors (20) um einen vertikalen Achsenverlauf für ein Hinterrad zu ermöglichen, wenn dieses Hinterrad gebremst wird, während das andere Hinterrad angetrieben wird.

2. Landwirtschaftstraktor gemäß Anspruch 1, dadurch gekennzeichnet, daß die Lagervorrichtung (40) zumindest ein um eine Längsachse drehbares Drehelement (42) umfaßt.

3. Landwirtschaftstraktor gemäß Anspruch 2, dadurch gekennzeichnet, daß das Drehelement um eine vertikale Achse verschwenkbar ist.

4. Landwirtschaftstraktor gemäß Anspruch 2, dadurch gekennzeichnet, daß das Drehelement mittels des Lenkgetriebes des Traktors gesteuert werden kann.

5. Landwirtschaftstraktor gemäß Anspruch 2, dadurch gekennzeichnet, daß das Drehelement motorgetrieben ist.

6. Landwirtschaftstraktor gemäß Anspruch 1, dadurch gekennzeichnet, daß die Vorderräder (28ₗ, 28ᵣ) an einer um eine Längsachse (32) schwenkbaren Achse (30) gelagert sind und daß Mittel (44) zum Feststellen der Achse (30) in einer vorbestimmten Position vorgesehen sind.

7. Landwirtschaftstraktor gemäß Anspruch 6, dadurch gekennzeichnet, daß er ein selbstsperrendes Differential umfaßt, das mit den Hinterrädern (26ₗ, 26ᵣ) verbunden ist, und daß er ferner eine Vorrichtung zum Entriegeln des Differentials umfaßt.

8. Landwirtschaftstraktor gemäß Anspruch 7, dadurch gekennzeichnet, daß er eine Steuereinheit umfaßt, die zur Vorbereitung des Traktors für ein Schnellwendemanöver geeignet ist, wobei die Steuereinheit mit dem Hebewerk (34), der Feststellvorrichtung (44) für die Vorderachse und der Vorrichtung zum Entriegeln des Differentials betriebsfähig verbunden ist.

9. Landwirtschaftstraktor gemäß Anspruch 8, dadurch gekennzeichnet, daß er ferner eine Meßfühlereinrichtung aufweist, um zu erfassen, welches Rad gebremst wurde, und folglich die Drehrichtung eines von dem Traktor gezogenen Pfluges zu bestimmen.

10. Verfahren zum schnellen Wenden eines Landwirtschaftstraktors, dadurch gekennzeichnet, daß es die Schritte umfaßt:
- Abheben der Vorderräder vom Boden mittels eines Hebewerks (34), das mit einem Lagerelement (40) versehen ist, das zur Zusammenarbeit mit dem Boden vorgesehen ist, und
- Abbremsen eines Hinterrads des Traktors und Antreiben des anderen Hinterrads in einer Kreisbewegung, um eine Drehung des Traktors um einen vertikalen Achsenverlauf für das gebremste Hinterrad zu erzeugen.

## Revendications

1. Tracteur agricole (20) comportant une paire de roues arrière (26l, 26r), une paire de roues avant (28l, 28r) et un dispositif de relevage (34) monté sur la partie avant du tracteur, le dispositif de relevage (34) portant un dispositif de support (40) prévu pour coopérer avec le sol afin de soulever les roues avant (28l, 28r), caractérisé en ce que le tracteur possède un système de freinage à circuit séparé destiné à freiner séparément les roues droites ou les roues gauches, et en ce que ledit dispositif de support (40) est prévu pour se déplacer par rapport au sol le long d'une direction sensiblement transversalement à la direction de conduite du tracteur (20) de façon à permettre une rotation du tracteur (20) autour d'un axe vertical passant par une roue arrière lorsque cette roue arrière est freinée alors que l'autre roue arrière est entraînée.

2. Tracteur agricole selon la revendication 1, caractérisé en ce que ledit dispositif de support (40) comporte au moins un élément rotatif (42) pouvant tourner autour d'un axe longitudinal.

3. Tracteur agricole selon la revendication 2, caractérisé en ce que ledit élément rotatif peut pivoter autour d'un axe vertical.

4. Tracteur agricole selon la revendication 2, caractérisé en ce que ledit élément rotatif peut être commandé au moyen du mécanisme de direction du tracteur.

5. Tracteur agricole selon la revendication 2, caractérisé en ce que ledit élément rotatif est entraîné par moteur.

6. Tracteur agricole selon la revendication 1, caractérisé en ce que les roues avant (28l, 28r) sont portées par un essieu avant (30) pouvant pivoter autour d'un axe longitudinal (32), et en ce que des moyens (44) sont prévus pour bloquer dans une position prédéterminée l'essieu (30).

7. Tracteur agricole selon la revendication 6, caractérisé en ce qu'il comporte un différentiel autobloquant relié aux roues arrière (26l, 26r) et en ce qu'il comporte en outre un dispositif destiné à débloquer ledit différentiel.

8. Tracteur agricole selon la revendication 7, caractérisé en ce qu'il comporte une unité de commande prévue pour préparer le tracteur pour une manoeuvre de demi-tour rapide, ladite unité de commande étant reliée de manière opérationnelle au dit dispositif de relevage (34), au dit dispositif destiné à bloquer l'essieu avant (44) et au dit dispositif destiné à débloquer le différentiel.

9. Tracteur agricole selon la revendication 8, caractérisé en ce qu'il comporte en outre des moyens de capteur destinés à détecter quelle roue a été freinée et destinés à déterminer par conséquent le sens de rotation d'une charrue portée par le tracteur.

10. Procédé de demi-tour rapide d'un tracteur agricole, caractérisé en ce qu'il comporte les étapes consistant à :
- soulever du sol les roues avant au moyen d'un dispositif de relevage (34) pourvu d'un élément de support (40) prévu pour coopérer avec le sol, et
- freiner une roue arrière du tracteur et entraîner en rotation l'autre roue arrière, de façon à produire une rotation du tracteur autour d'un axe vertical passant par la roue arrière freinée.
